(19) Europäisches Patentamt
European Patent Office
Office européen des brevets

(11) Publication number : **0 516 716 B1**

(12) # EUROPEAN PATENT SPECIFICATION

(45) Date of publication of patent specification : **08.12.93 Bulletin 93/49**

(51) Int. Cl.$^5$ : **A61C 9/00**

(21) Application number : **91905141.7**

(22) Date of filing : **25.02.91**

(86) International application number : **PCT/US91/01270**

(87) International publication number : **WO 91/12777 05.09.91 Gazette 91/21**

(54) **THERMOPLASTIC CUSTOM DENTAL TRAY HAVING HIGH MODULUS WARM STATE.**

(30) Priority : **23.02.90 US 484106**

(43) Date of publication of application : **09.12.92 Bulletin 92/50**

(45) Publication of the grant of the patent : **08.12.93 Bulletin 93/49**

(84) Designated Contracting States : **CH DE GB IT LI**

(56) References cited :
**WO-A-90/14052**
**US-A- 4 361 528**

(73) Proprietor : **MINNESOTA MINING AND MANUFACTURING COMPANY**
**3M Center, P.O. Box 33427**
**St. Paul, Minnesota 55133-3427 (US)**

(72) Inventor : **OXMAN, Joel, D.**
**Post Office Box 33427**
**Saint Paul, MN 55133 (US)**
Inventor : **UBEL, F., Andrew, III**
**Post Office Box 33427**
**Saint Paul, MN 55133 (US)**

(74) Representative : **Mossmark, Anders et al**
**Albihn West AB Box 142**
**S-401 22 Göteborg (SE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 516 716 B1

## Description

### FIELD OF THE INVENTION

This invention relates to dental impression-making using a customizable thermoplastic tray.

### BACKGROUND OF THE INVENTION

High molecular weight poly (epsilon-caprolactone) (also known as "polycaprolactone") has been used as a thermoplastic molding compound for general-purpose modelmaking and dentistry. References describing polycaprolactone molding compositions include U.S. Pat. No. 4,835,203, Kokai (Japanese Published Pat. Appl.) Nos. 63-171554 and 63-270759, and TONE$^R$POLYMERS P-300 AND P-700 High Molecular Weight Caprolactone Polymers (1988 product literature of Union Carbide Corp.).

Commercially available thermoplastic dental custom trays include the "EASY TRAY" from Oral Dynamics Inc. Division of Anson International, the "HEAT FORM" tray from Shofu, Inc., and the "AQUERON" custom tray from Erkodent Company. These three products are sold in the form of thin, stiff wafers that are immersed in hot (for example, 77°C) water to soften the wafer, then inserted in a patient's mouth and conformed by hand to the shape of the patient's dental tissue. The shaped wafer is then cooled (for example, using a stream of cold water) and removed from the mouth. The resulting custom impression tray can be filled with elastomeric impression material (for example, a polyvinyl siloxane) and reinserted in the mouth to take an impression of the dental tissue.

U.S. Pat. Nos. 4,227,877, 4,361,528, 4,413,979 and 4,768,951 describe thermoplastic impression trays. The trays of the '877 patent are said to be made of acrylic, and when warmed to change from a glassy, brittle state to a leathery state characterized by a "change in stiffness of several orders of magnitude".

Japanese Published Application No. Sho [1988]-47706 describes a fiber-reinforced acrylic plastic impression tray. Although not intended to be heat-softened during use, the tray is said to be reinforced with several materials including fibers and cloth.

U.S. Pat. Nos. 4,240,415 and 4,483,333 describe the use of polyethylene and certain other fillers in polycaprolactone orthopedic casts. The patentee cautions against the use of fillers such as fumed silica, mica and clay, on grounds that they are unsuitable for reasons such as cost, weight, opacification and the need to use expensive equipment to mix the filler with the polycaprolactone.

U.S. Pat. No. 4,595,713 describes medical implants made from a copolymer of epsilon-caprolactone and a lactide. The implants are said optionally to contain osteogenic fillers or chopped carbon fiber for the purpose of encouraging tissue regeneration.

### SUMMARY OF THE INVENTION

The above-described commercial thermoplastic custom trays are relatively stiff when cold but very flexible when heated to the intended use temperature. Although the AQUERON tray is somewhat less flexible when warm than the EASY TRAY or HEAT FORM products, all three custom tray wafers might best be described as "floppy" when heated. It is very difficult to maintain such a wafer in a desired shape until it cools, especially when working inside the mouth. These difficulties are exacerbated when shaping the wafer to conform to the maxillary arch, or to the mandibular arch of an inclined patient. The dentist must constantly fight the gravitational tendency of the wafer to droop or sag. These problems have discouraged some dentists from using thermoplastic custom tray materials, or led dentists to restrict their use to applications involving less than a full arch.

The tray of our invention has substantially improved warm statc properties compared to the above-mentioned commercial trays. Our tray retains substantial stiffness when heated, thus avoiding the undesirably floppy character of the commercial trays mentioned above.

The customizable dental tray of the invention comprises a homogeneous blend of a thermoplastic material (for example, polycaprolactone) and thixotropic filler (for example, submicron silica), the tray being shaped and sized for use in the mouth, and the blend being a solid with a storage modulus (G') of at least about 100 $MN/_m^2$ [$10^9$ dyne/cm$^2$] at 38°C and a manually-deformable semi-solid with a storage modulus less than 100 $GN/_m^2$ [$10^{12}$ dyne/cm$^2$] at a temperature that comfortably can be withstood by oral tissues for example at some temperature between body temperature and about 75°C, the type and amount of filler being sufficient so that the blend has a storage modulus greater than 100 $KN/_{m2}$ [$10^6$ dyne/cm$^2$] at 75°C and an equilibrium relaxation stress ($\tau_e$) greater than 50 $N/_m^2$ [500 dyne/cm$^2$] at 60°C.

The invention also relates to the use of such a tray for making an impression of dental tissue.

## BRIEF DESCRIPTION OF THE DRAWING

FIG. 1 is a plot of storage modulus vs. temperature for three commercial trays and several trays of the invention;
FIG. 2 is a plot of relaxation stress vs. time for three current commercial trays and a tray of the invention;
FIG. 3 is a plot of relaxation stress vs. time for a tray of the invention at three different temperatures;
FIG. 4 is a perspective view of a tray of the invention; and
FIG. 5 is a section through line 5-5 of FIG. 4.

## DETAILED DESCRIPTION

A variety of thermoplastic materials can be used in the custom trays of the invention. Selection of the thermoplastic material should be based in part on the desired tray properties in the softened ("warm") and solid ("cool") states. The warm state is characterized by appreciable mass flow under moderate (hand) pressure at some temperature between body temperature (about 38°C) and the maximum temperature that comfortably can be withstood by oral tissues. The maximum temperature is generally thought to be about 75°C although a maximum of about 65°C is preferred. The cool state is characterized by sufficient strength and stiffness to permit an acceptably accurate dental impression to be made in the tray, and by minimal apparent mass flow under moderate pressure at temperatures below 38°C.

The warm and cool state properties permit the tray to be heated to a moderate temperature, manually shaped inside or outside the mouth ("customized") while warm to conform to the shape of hard and soft oral tissue, substantially rigid custom tray.

Representative thermoplastic materials include polyesters and polyurethanes such as those described in U.S. Pat. Nos. 3,382,202, 4,059,715, 4,182,829, 4,327,013, 4,361,538, 4,552,906 and 4,569,342, and copolymers such as those described in U.S. Pat. Nos. 4,659,786, 4,740,245 and 4,768,951. The thermoplastic material preferably is a homopolymer or copolymer of epsilon-caprolactone. The polycaprolactone optionally can contain property-modifying or cross-linkable functional groups (for example hydroxyl, acrylate, methacrylate, epoxy, isocyanato or vinyl groups) if desired. Blends of polycaprolactones can also be employed.

Preferred polycaprolactones have the formula:

I. 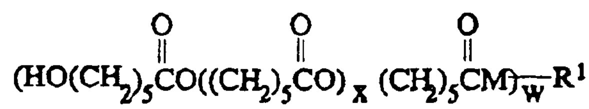

where $R^1$ is hydrogen or an aromatic or a straight chain or branched aliphatic backbone, which can optionally contain one or more non-interfering substituents such as hydroxyl or amine groups, w is 1 if $R^1$ is hydrogen, and w otherwise has an average value of about 1 to 4, M is oxygen or $-NR^2-$ where $R^2$ is hydrogen or a non-interfering aromatic or aliphatic group, and the product of w times x is greater than about 35.

Preferred commercially available polycaprolac-tone polymers include "TONE P-700" and "TONE P-767" (40,000 molecular weight) and "TONE P-300" (10,000 molecular weight) polycaprolactones from Union Carbide Corp., and the "CAPA" polycaprolactones "630" (30,000 molecular weight), "640" (40,000 molecular weight), "650" (50,000 molecular weight), and "656" (56,000 molecular weight) from Interox.

The thixotropic filler preferably has a fibrous, platy or finely-divided particulate form. Suitable fillers include glass fibers, clay, mica, alumina, submicron silica (for example, fumed, precipitated or colloidal silica) and finely-divided calcium carbonate. The fillers can be untreated or treated with a suitable coupling agent (for example, a silane).

For fibrous or platy fillers, the filler preferably has an aspect ratio greater than about 3:1, more preferably greater than about 5:1, and most preferably greater than about 10:1. For particulate fillers, the particles preferably have an average particle diameter less than about 100 micrometers, more preferably less than about 10 micrometers, and most preferably less than about 1 micrometer.

The blend from which the tray is formed can if desired contain adjuvants to modify or improve the physical properties of the tray. Suitable adjuvants include solvents, diluents, plasticizers, pigments, dyes, indicators, inhibitors, stabilizers, UV absorbers, medicaments (e.g., leachable fluorides), biocides and the like.

The blend preferably contains a free-radically polymerizable resin and an initiator. The free-radically polymerizable resin contains at least one ethylenically unsaturated monomer, oligomer, or polymer capable of undergoing addition polymerization. Suitable monomers include mono-, di- or polyfunctional acrylates and methacrylates such as methyl acrylate, methyl methacrylate, ethyl acrylate, isopropyl methacrylate, n-hexyl acrylate, styryl acrylate, allyl acrylate, glycerol diacrylate, glycerol triacrylate, ethyleneglycol diacrylate, diethyleneglycol diacrylate, triethyleneglycol dimethacrylate, 1,3-propanediol diacrylate, 1,3-propanediol dimethacrylate, trimethylolpropane triacrylate, 1,2,3-butanetriol trimethacrylate, 1,4-cyclohexanediol diacrylate, pentaerythritol triacrylate, pentaerythritol tetraacrylate, pentaerythritol tetramethacrylate, sorbitol hexacrylate, bis[1-(2-acryloxy)]-p-ethoxyphenyldimethylmethane, bis[1-(3-acryloxy-2-hydroxy)]-p-propoxyphenyldimethylmethane, tris-hydroxyethylisocyanurate triacrylate, beta-methacrylaminoethyl methacrylate, and mixtures thereof. Other suitable monomers include unsaturated amides such as methylene bis-acrylamide, methylene bis-methacrylamide, 1,6-hexamethylene bis-acrylamide and diethylenetriamine tris-acrylamide. Suitable oligomeric or polymeric resins include 200 to 500 molecular weight polyalkylene glycols, acrylated or methacrylated oligomers such as those of U.S. Pat. No. 4,642,126, acrylated urethanes such as "SARTOMER" 9503, 9504 and 9505 (Sartomer Corp.), "INTEREZ" CMD 8803, 8804 and 8805 (Radcure Specialties, Inc.), and "PHOTOMER" 6060, 6110 and 6160 (Henkel Corp.), as well as acrylated polyester oligomers such as "EBERCRYL" 830 (Radcure Specialties, Inc.). Mixtures of free-radically polymerizable monomers, oligomers or polymers can be used if desired.

The free-radically polymerizable resin can if desired be cured using a conventional chemical initiator system, such as a combination of a peroxide and an amine. However, chemical cure systems typically require at least partial ingredient separation before use. The resin is preferably cured using a photoinitiator, optionally combined with a suitable photosensitizer or accelerator. The photoinitiator should be capable of generating free radicals for addition polymerization at some wavelength between 200 and 800 nm. Suitable photoinitiators include alpha-diketones, monoketals of alpha-diketones or ketoaldehydes, acyloins and their corresponding ethers, chromophore-substituted halomethyl-s-triazines, chromophore-substituted halomethyl-oxadiazoles, aryliodonium salts, and other commercially available ultraviolet ("UV") and visible light photoinitiators. Preferred photoinitiator systems include a mono or diketone photoinitiator together with a suitable donor compound or accelerator, such as the systems described in U.S. Pat. Nos. 3,427,161, 3,756,827, 3,759,807, 4,071,424, 4,828,583, U.K. Pat. Specification No. 1,304,112, European Published Pat. Appl. No. 150,952 and Chem. Abs. 95:225704U.

The blend should remain substantially homogeneous (that is, it should not undergo macroscopic phase separation or filler sedimentation). The composition preferably should retain its desired physical properties even if repeatedly cycled between the warm and cool states. Thus the selection of ingredients can be guided in part by the desire to preserve homogeneity and thermal reversibility.

The types and amounts of ingredients in the blend usually will be empirically selected based on certain desired physical properties of the blend. The blend should be a solid at 38°C, and at that temperature should have a storage modulus of at least about 100 $MN/_m^2$ [$10^9$ dyne/cm$^2$]. At 45°C (a temperature slightly above body temperature, and a temperature at which the blend preferably remains a solid) the blend preferably has a storage modulus greater than about 200 $MN/_m^2$ [2 X $10^9$ dyne/cm$^2$], and more preferably greater than about 300 $MN/_m^2$ [3 X $10^9$ dyne/cm$^2$]. Storage modulus measurements are conveniently made using a rheometric dynamic analyzer (Rheometrics, Inc.) operated at 1.4% maximum strain and a 10 radian/second strain rate.

When heated above body temperature to an elevated temperature that comfortably can be withstood by oral tissues, the blend should form a manually-deformable semi-solid. By this we mean that a thin (for example, 3mm thick) sheet of the blend should not flow under its own weight, but should be bendable and stretchable using hand pressure. When heated to this elevated temperature, the blend should have a storage modulus between about 100 $KN/_m^2$ [$10^6$ dyne/cm$^2$] and about 1 $GN/_m^2$ [$10^{10}$ dyne/cm$^2$]. Preferably throughout the range of temperatures between 45°C and 75°C the storage modulus is less than about 100 $GN/_m^2$ [$10^{12}$ dyne/cm$^2$] but greater than about 100 $KN/_m^2$ [$10^6$ dyne/cm$^2$]. More preferably, throughout the range of tempertures between 50°C and 70°C the storage modulus is less than 10 $GN/_m^2$ [$10^{11}$ dyne/cm$^2$] but greater than 300 $KN/_m^2$ [3 X $10^6$ dyne/cm$^2$]. Most preferably, throughout the range of temperatures between 50°C and 65°C the storage modulus is less than 10 $GN/_m^2$ [$10^{11}$ dyne/cm$^2$] but greater than 500 $KN/_m^2$ [5 X $10^6$ dyne/cm$^2$]. These latter three limiting ranges correspond to the boxes depicted in FIG. 1.

At 60°C (a temperature at which the blend comfortably and efficiently can be used intraorally), the blend should have an equilibrium relaxation stress ($\tau_c$) greater than about 50 $N/_m^2$ [5 X $10^2$ dyne/cm$^2$]. Preferably the 60°C equilibrium relaxation stress is greater than about 100 $N/_m^2$ [$10^3$ dyne/cm$^2$], more preferably it is greater than 300 $N/_m^2$ [3 X $10^3$ dyne/cm$^2$], and most preferably it is greater than 1 $KN/_m^2$ [$10^4$ dyne/cm$^2$]. A 600 second (10 minute) time limit, or a relaxation stress less than 50 $N/_m^2$ [500 dyne/cm$^2$] (the lower detection limit of the rheometric dynamic analyzer), is a convenient cut-off period for measurement of the equilibrium relaxation stress. Relaxation stress measurements are conveniently made by operating the rheometric dynamic analyzer at 50% step strain, using a 12.5mm radius circular platen.

In rheological terms, the blends used in the trays of our invention behave as a viscoelastic solid, whereas the commercial trays mentioned above behave more like Newtonian liquids.

As a further guide, the preferred amounts of thermoplastic material and filler in the tray are as follows:

| Ingredient | Preferred Weight % | Most Preferred Weight % |
|---|---|---|
| Thermoplastic material | up to 90 | 80 - 40 |
| Filler | 0 - 70 | 20 - 60 |

The tray ingredients can be combined by hand or by mechanical mixing. The ingredients preferably are warmed sufficiently to melt the thermoplastic material, but if desired can be mixed at lower temperatures. Any suitable mixing device can be used, including kettles equipped with a mechanical stirrer, extruders, rubber mills, and the like.

The tray can be shaped using methods such as extrusion, injection molding and web processing using a coating knife or rollers. The tray can be sold to the dentist in a variety of forms including flat or curved wafers, conventional molded tray configurations, preformed sheets, ropes, buttons, woven or non-woven webs and the like. The tray can be sold unwrapped, loosely wrapped in a package, or packaged in a flexible outer plastic skin. The tray can be extruded or cast in mono-, bi-, or poly-layers (for example, coplanar layers or layers arranged in core-shell fashion) in which each layer has a selected melting temperature, viscosity, modulus, stickiness, or other desired physical properties.

A preferred form of the invention is shown in FIGS. 4 and 5. Arch-shaped tray 5a has outer thermoplastic shell 1a made from a blend according to the invention. The interior of the tray is lined with scrim 3a, which promotes adhesion between material 1a and curable impression material 7. By warming tray 5a and shaping it to conform closely to the teeth to be modeled, the required amount of impression material 7 (typically an expensive substance) can be minimized. The required amount will typically be much less than depicted in FIG. 5 (in which the tray is shown in an uncustomized state and full of impression material), and ordinarily need be only enough to coat the walls of tray 5a.

The tray can be converted from the cool state to the warm state by using a variety of energy sources. The tray can be immersed in a heated bath containing a suitable inert liquid (for example, water or a fluorochemical fluid) that will not dissolve or swell the tray in either its cool or warm states. The tray can also be softened using heat sources such as a hot air gun, hot plate, conventional oven, infrared heater or microwave oven.

Transforming the tray from a warm state to a cool state requires loss of thermal energy and can be carried out using a variety of cooling techniques. Cooling can take place under ambient conditions in the presence of air only. Cooling can be expedited using forced air, cold water, ice, or heat sinks such as chilled "cold packs" or flexible pouches containing low boiling inert liquids. Of particular interest for dental applications are chilled cold packs in flexible pouches that have been preshaped to match the contours of the tray being cooled. For example, flexible pouches containing a chilled coolant can be fabricated in the shape of a full arch or quadrant and placed intraorally in contact with the warm tray.

A simplified dental impression system can be prepared from the tray. Traditional impressioning systems employ one or more low viscosity, flowable elastomeric materials such as an alginate, hydrocolloid, polyvinylsiloxane, polyether, or polysulfide contained in a fairly rigid adhesive-coated plastic or metal arch-shaped standard tray. The elastomeric material often is applied both to the dental tissue to be modeled and to the standard tray. The elastomeric material and surrounding standard tray are subsequently pressed against the dental tissue, and left in place until the elastomeric material has hardened. This traditional process involves several materials and steps, material waste and fairly lengthy set times.

The present invention permits impressioning using a monolayer or a bilayer thermoplastic tray. In a preferred embodiment, a flat sheet or a preformed arch-shaped tray is made from two coextruded thermoplastic layers. The physical properties of each layer emulate in part the properties of a conventional rigid tray and the elastomeric material respectively. The "tray" layer preferably is a tray of the invention. At a suitable elevated temperature the tray layer becomes a conformable, non-sticky, non-floppy shell (thereby permitting the warm tray layer to be hand-shaped into a custom tray configuration) and the "elastomer" layer exhibits good flow and low viscosity (thereby permitting the warm elastomer layer to flow around tooth structure and provide an accurate model). The warm bilayer construction provides easy placement, accurate impressioning, and efficient use of materials. Cooling can take place rapidly, and in less time than is required to harden a conventional impression. While cooling, the tray layer exhibits sufficient rigidity to discourage distortion of the impression during cooling, removal from the mouth and subsequent handling.

If desired, a tray of the invention can be filled with a conventional elastomeric impression material (for example, a silicone elastomer) By shaping the tray in the mouth before (or if desired, after) it is filled with elastomer, the tray volume and required amount of elastomer will be minimized.

The following examples are offered to aid in understanding the invention and are not to be construed as limiting its scope. Unless otherwise indicated, all parts and percentages are by weight.

EXAMPLE 1

A thermoplastic custom tray was prepared by combining 22.5 parts "TONE P-767" (40,000 molecular weight) polycaprolactone, 7.5 parts "SR-9505" urethane diacrylate oligomer, 1.2 parts "EBERCRYL 830" polyester hexacrylate, 45 parts "VICRON" calcium carbonate (Pfizer Corp.), 10 parts "SIPERNAT D-11" treated precipitated silica (North American Silica Co.), 5 parts "ULTRASIL VN 3 SP" untreated precipitated silica (North American Silica Co.), 4 parts "1156" chopped glass fibers (PPG), and 0.75 parts each camphorquinone ("CPQ") and p-dimethylaminobenzoate ("EDMAB"). The ingredients were stirred in a warm vessel at 100°C until homogeneous. The resulting blend formed a castable thermoplastic that was solid and stiff at 38°C, but which softened readily in a 60°C water bath to form a manually-deformable but usefully stiff semi-solid with excellent warm handling properties.

EXAMPLE 2

Using the method of EXAMPLE 1, but using "QUSO WR55" hydrophobic silica (North American Silica Co.) in place of "SIPERNAT D-11" silica, 33 tray compositions were prepared, containing ingredients in the amounts set out below in TABLE I:

TABLE I

| Run | PCL[1] | Urethane diacrylate[2] | Polyester hexacrylate[3] | Ingredients Calcium carbonate[4] | Treated silica[5] | Untreated silica[6] | Glass Fibers[7] | CPQ | EDMAB |
|---|---|---|---|---|---|---|---|---|---|
| 1 | 498.5 | 166.2 | 22.18 | 960 | 218 | 20 | 82 | 16.63 | 16.63 |
| 2 | 498.5 | 166.2 | 22.18 | 704 | 166 | 82 | 328 | 16.63 | 16.63 |
| 3 | 415.4 | 138.5 | 18.48 | 1050 | 182 | 34 | 134 | 13.86 | 13.86 |
| 4 | 498.5 | 166.2 | 22.18 | 960 | 166 | 123 | 31 | 16.63 | 16.63 |
| 5 | 415.4 | 138.5 | 18.48 | 770 | 182 | 358 | 90 | 13.86 | 13.86 |
| 6 | 498.5 | 166.2 | 22.18 | 704 | 218 | 287 | 72 | 16.63 | 16.63 |
| 7 | 415.4 | 138.5 | 18.48 | 1050 | 238 | 90 | 22 | 13.86 | 13.86 |
| 8 | 415.4 | 138.5 | 18.48 | 770 | 238 | 78 | 314 | 13.86 | 13.86 |
| 9 | 456.9 | 152.3 | 20.33 | 871 | 201 | 134 | 134 | 15.25 | 15.25 |
| 10 | 456.9 | 152.3 | 20.33 | 871 | 201 | 134 | 134 | 15.25 | 15.25 |
| 11 | 456.9 | 152.3 | 20.33 | 871 | 201 | 134 | 134 | 15.25 | 15.25 |
| 12 | 498.5 | 166.2 | 22.18 | 960 | 166 | 31 | 123 | 16.63 | 16.63 |
| 13 | 498.5 | 166.2 | 22.18 | 704 | 166 | 328 | 82 | 16.63 | 16.63 |
| 14 | 415.4 | 138.5 | 18.48 | 1050 | 238 | 22 | 90 | 13.86 | 13.86 |
| 15 | 415.4 | 138.5 | 18.48 | 770 | 182 | 90 | 358 | 13.86 | 13.86 |
| 16 | 415.4 | 138.5 | 18.48 | 770 | 238 | 314 | 78 | 13.86 | 13.86 |
| 17 | 498.5 | 166.2 | 22.18 | 704 | 218 | 72 | 287 | 16.63 | 16.63 |
| 18 | 415.4 | 138.5 | 18.48 | 1050 | 182 | 134 | 34 | 13.86 | 13.86 |
| 19 | 498.5 | 166.2 | 22.18 | 960 | 218 | 82 | 20 | 16.63 | 16.63 |

| Run | PCL[1] | Urethane diacrylate[2] | Polyester hexacrylate[3] | Calcium carbonate[4] | Treated silica[5] | Untreated silica[6] | Glass Fibers[7] | CPQ | EDMAB |
|---|---|---|---|---|---|---|---|---|---|
| 20 | 456.9 | 152.3 | 20.33 | 871 | 201 | 134 | 134 | 15.25 | 15.25 |
| 21 | 456.9 | 152.3 | 20.33 | 871 | 201 | 134 | 134 | 15.25 | 15.25 |
| 22 | 456.9 | 152.3 | 20.33 | 871 | 201 | 134 | 134 | 15.25 | 15.25 |
| 23 | 373.8 | 124.6 | 16.63 | 949 | 219 | 146 | 146 | 12.47 | 12.47 |
| 24 | 540.0 | 180.0 | 24.02 | 793 | 183 | 122 | 122 | 18.02 | 18.02 |
| 25 | 456.9 | 152.3 | 20.33 | 603 | 201 | 268 | 268 | 15.25 | 15.25 |
| 26 | 456.9 | 152.3 | 20.33 | 1139 | 201 | 0 | 0 | 15.25 | 15.25 |
| 27 | 456.9 | 152.3 | 20.33 | 871 | 201 | 16 | 252 | 15.25 | 15.25 |
| 28 | 456.9 | 152.3 | 20.33 | 871 | 201 | 252 | 16 | 15.25 | 15.25 |
| 29 | 456.9 | 152.3 | 20.33 | 871 | 147 | 161 | 161 | 15.25 | 15.25 |
| 30 | 456.9 | 152.3 | 20.33 | 871 | 255 | 107 | 107 | 15.25 | 15.25 |
| 31 | 456.9 | 152.3 | 20.33 | 871 | 201 | 134 | 134 | 15.25 | 15.25 |
| 32 | 456.9 | 152.3 | 20.33 | 871 | 201 | 134 | 134 | 15.25 | 15.25 |
| 33 | 456.9 | 152.3 | 20.33 | 871 | 201 | 134 | 134 | 15.25 | 15.25 |

1 "PCL" = "TONE P-767" 40,000 molecular weight polycaprolactone.
2 "SR-9505" urethane diacrylate.
3 "EBERCRYL 830" polyester hexacrylate.
4 "VICRON" calcium carbonate.
5 "QUSO WR55 treated silica.
6 "ULTRASIL VN 3 SP" untreated silica.
7 "1156" chopped glass fibers.

The trays of EXAMPLE 1 and of Runs 1 through 4, 6 through 8, 10 and 26 of EXAMPLE 2 were evaluated to determine storage modulus. Samples of "EASY TRAY", "HEAT FORM", and "AQUERON" tray materials were similarly evaluated. FIG. 1 shows an unsmoothed plot of storage modulus vs. temperature for each tray over the range from 30°C to 80°C.

Curves A, B, and C show the results for "EASY TRAY", "HEAT FORM", and "AQUERON" tray materials, respectively. Note that once these trays begin to melt (at about 60°C) storage modulus drops precipitously, falling below 100 $KN/_m^2$ [$10^6$ dyne/$cm^2$] before the temperature reaches 75°C, When warm, these trays are difficult to maintain in a desired shape, especially while working intraorally.

Curve F shows the results for the tray of EXAMPLE 1, and curves D, E and G through M show the results for the trays of Runs 6, 8, 10, 2, 7, 4, 3, 1 and 26 of EXAMPLE 2. The tray material of Run 6 (curve D) softened above about 57°C, but was very stiff and would be difficult to form to a desired shape, especially while working intraorally. The trays shown in the remaining curves had very good properties in the warm state. The trays shown in curves E through I were particularly easy to maintain in a desired shape during cooling.

EXAMPLE 3

The tray of EXAMPLE 1 was evaluated to determine 60°C equilibrium relaxation stress. Samples of "EASY TRAY", "HEAT FORM", and "AQUERON" tray materials were similarly evaluated. FIG. 2 shows a plot of relaxation stress vs. time for each tray over a ten minute time span. Curves N, O, and P show the results for "EASY TRAY", "HEAT FORM", and "AQUERON" tray materials, respectively. Note that once these trays are subjected to an initial step stress, the relaxation stress drops steadily, falling below 300 $N/_m^2$ [3 X $10^3$ dyne/$cm^2$] in less than ten minutes. In contrast, the tray of EXAMPLE 1 (curve Q) asymptotically approaches a relaxation stress greater than about 1 $KN/_m^2$ [$10^4$ dyne/$cm^2$]. The tray of EXAMPLE 1 exhibited rheological behavior characteristic of a viscoelastic solid.

Similar measurements were performed for the trays of Runs 1 and 26 of TABLE I. Set out below in TABLE II are the relaxation stress values and the times at which the measurement was stopped (or at which the relaxation stress dropped below the 50 $N/_m^2$ [500 dyne/$cm^2$] detection limit of the rheometric dynamic analyzer) for each tray, at temperatures of 60°C, 70°C and 80°C.

TABLE II

| Tray | Temp., °C | Relaxation stress (τ), $N/_m^2$ [dyne/cm²] | Time, sec |
|---|---|---|---|
| "EASY TRAY" | 60 | <50 [<500] | 103 |
| "EASY TRAY" | 70 | <50 [<500] | 178 |
| "EASY TRAY" | 80 | <50 [<500] | 141 |
| "HEAT FORM" | 60 | <50 [<500] | 253 |
| "HEAT FORM" | 70 | <50 [<500] | 254 |
| "HEAT FORM" | 80 | <50 [<500] | 55 |
| "AQUERON" | 60 | 208.1 [2,081] | >600 |
| "AQUERON" | 70 | 260.6 [2,606] | >600 |
| "AQUERON" | 80 | 239.7 [2,397] | >600 |
| EXAMPLE 1 | 60 | 1606.0 [16,060] | >600 |
| EXAMPLE 1 | 70 | 979.0 [9,790] | >600 |
| EXAMPLE 1 | 80 | 937.4 [9,374] | >600 |
| Run 1, TABLE I | 60 | 414.8 [4,148] | >600 |
| Run 1, TABLE I | 70 | 170.7 [1,707] | >600 |
| Run 1, TABLE I | 80 | 329.0 [3,290] | >600 |
| Run 26, TABLE I | 60 | 1761.0 [17,610] | >600 |
| Run 26, TABLE I | 70 | 555.6 [5,556] | >600 |
| Run 26, TABLE I | 80 | 585.4 [5,854] | >600 |

The above data illustrates the substantial equilibrium relaxation stress of several trays of the invention.

FIG. 3. shows a plot of relaxation stress vs. time for the tray of EXAMPLE 1 at 60°C (curve R), 70°C (curve S) and 80°C (curve T). As shown by the curves, the desirable rheological properties of the tray were maintained at elevated temperatures.

EXAMPLE 4

The blend of EXAMPLE 1 was heated on a hot plate until softened, then cast atop polyester film into a 2.5mm thick sheet into which was pressed a web of "SONTARA 8000" nonwoven material (E.I. DuPont de Nemours & Co.). The warm sheet was cut into generally U-shaped pieces using a "cookie cutter" style cutting implement. Each piece was squeezed while still warm between two halves of a silicone mold to form an arch-shaped, nonwoven scrim-lined customizable tray. The tray could be reheated and shaped while warm to conform to a patient's dentition. When irradiated for two minutes in a "STAR-CURE" curing chamber (Star X-ray, Inc.), a tray with heat-resistant semi-permanent shape memory was obtained. The tray can also be photocured by setting it under a conventional dental operatory light (for example, a "RITTER STAR LIGHT", Sybron Corp.) for two minutes per side.

EXAMPLE 5

Using the method of EXAMPLE 1, a photosettable thermoplastic custom tray was prepared by mixing the ingredients set out below in TABLE III:

TABLE III

| Ingredient | Parts |
|---|---|
| "TONE P-767" Polycaprolactone | 27.0 |
| "CMD 8805" Urethane diacrylate | 12.3 |
| CPQ | 0.5 |
| EDMAB | 0.5 |
| "IMSIL A-25" Filler | 10.0 |

The resulting thermoplastic blend was fabricated into a partially formed tray having a half-moon shape and a protruding handle at the midline. The tray (excluding its handle) was suspended in a 70°C water bath until transparent, then shaped to fit around the full arch of a "TYPODONT" model (Columbia Dentoform, Inc.). The tray was allowed to cool slightly and then removed from the model. The resulting custom tray was uniformly irradiated with a "VISILUX 2" curing light for about 2 minutes, yielding a rigid photoset tray. The tray was placed in an 80°C oven for 10 minutes. It retained its shape without slumping.

"EXPRESS" tray adhesive (3M) was applied to the photoset custom tray with a brush and allowed to dry for about 5 minutes. "IMPRINT" single phase impression material (3M) was syringed onto the model and into the tray. The tray was reseated on the model and the impression material allowed to set for about 5 minutes. Upon removal of the tray from the model the impression material remained firmly adhered to the tray.

EXAMPLE 6

Using the method of EXAMPLE 5, an unirradiated customizable tray was prepared and placed in a resealable polyethylene bag of dimensions slightly greater than the tray. The bag was immersed in 70°C water until the full arch portion of the tray was transparent. The bag was removed from the water, and the bag and tray shaped to fit the full arch of a "TYPODONT" model. After cooling, the custom tray was easily removed from the bag. The bag serves as a convenient custom tray enclosure that discourages mess and contamination, and serves as a spacer between the dental tissue and tray. The spacer allows clearance for adequate amounts of impression material when a final impression is formed.

EXAMPLE 7

20 Parts "IMSIL A-25" ground quartz filler were added with stirring to an open vessel containing 24.5 parts "CMD-8805" urethane acrylate oligomer, 0.5 parts CPQ and 1.0 parts EDMAB. The mixture was stirred at 80°C until homogeneous. 54 Parts "TONE P-767" polycaprolactone were added to the vessel, and the mixture was heated with stirring at 80°C until molten.

Using a similar procedure, a control composition containing no filler and eight additional compositions containing various types and amounts of fillers were prepared. Set out below in TABLE IV are the amounts of polycaprolactone ("PCL") and polymerizable resin ("Resin") in each composition, the type and amount of filler in each composition, and the modulus for compositions that were not irradiated ("NIR") or irradiated while cold ("IR Cold").

**TABLE IV**

| Run no. | Ingredients: PCL Amount | Resin Amount | Filler: Type | Filler: Amount | Modulus, 30°C, $MN/_m{}^2$ [$dyne/cm^2$ x $10^8$]: NIR | IR cold |
|---|---|---|---|---|---|---|
| 1 | 74.0 | 24.5 | -- | -- | 32 [3.2] | 81 [8.1] |
| 2 | 54.0 | 24.5 | "IMSIL"[1] | 20 | 51 [5.1] | 71 [7.1] |
| 3 | 39.0 | 19.5 | " | 40 | NM[2] | 28 [2.8] |
| 4 | 54.0 | 24.5 | "VILRON"[3] | 20 | 15 [1.5] | 86 [8.6] |
| 5 | 39.0 | 19.5 | " | 40 | NM | 91 [9.1] |
| 6 | 54.0 | 24.5 | "DUROSIL"[4] | 20 | 70 [7.0] | 81 [8.1] |
| 7 | 54.0 | 24.5 | "OX-50"[5] | 20 | 68 [6.8] | 67 [6.7] |
| 8 | 54.0 | 24.5 | Treated "OX-10"[6] | 20 | 39 [3.9] | 94 [9.4] |
| 9 | 54.0 | 24.5 | Quartz[7] | 20 | 84 [8.4] | 69 [6.9] |

1 "IMSIL" Quartz filler (Illinois Minerals).
2 NM = not measured
3 "VICRON" calcium carbonate (Pfizer Corp.).
4 "DUROSIL" silica (North American Silica Co.).
5 "OX-50" pyrogenic silica (Degussa).
6 OX-50 pyrogenic silica treated with gamma-methacryloxypropyl trimethoxysilane.
7 quartz treated with gamma-methacryloxypropyl trimethoxysilane.

EXAMPLE 8

A thermoplastic custom tray was prepared by combining 36.7 parts "TONE P-767" polycaprolactone, 12 parts "SR-9505" urethane diacrylate oligomer, 2 parts "EBERCRYL 830" polyester hexacrylate, 20 parts "3075" chopped glass fibers (PPG), 11.7 parts "QUSO WR55" hydrophobic silica (North American Silica Co.), 16.6 parts "ULTRASIL VN 3 SP" untreated precipitated silica, 0.9 parts EDMAB, and 0.23 parts CPQ. The ingredients were stirred in a warm vessel at 100°C until homogeneous. The resulting blend formed an injection-moldable thermoplastic that was solid and stiff at 38°C, but which softened readily in a 60°C water bath to form a manually-deformable but usefully stiff semi-solid with excellent warm handling properties.

EXAMPLE 9

Using the method of EXAMPLE 8, a thermoplastic tray was prepared from a blend of 39.3 parts polycaprolactone, 14 parts urethane diacrylate oligomer, 5 parts polyester hexacrylate, 18.6 parts chopped glass fibers, 13.4 parts hydrophobic silica, 9.7 parts precipitated silica, 0.3 parts EDMAB, and 0.07 parts CPQ. The resulting composition had a somewhat whiter coloration and good handling properties.

Although this invention has been described using certain illustrative examples, it should be understood that the invention is not limited to the specific exemplary embodiments shown in this specification.

**Claims**

1. A custom dental tray, comprising a homogenous blend of a thermoplastic material and thixotropic filler, the tray being shaped and sized for use in the mouth, and the blend being a solid with a storage modulus of at least 100 $MN/_m^2$ [$10^9$ $dyne/cm^2$] at 38°C and a manually-deformable semi-solid with a storage modulus less than 100 $GN/_m^2$ [$10^{12}$ $dyne/cm^2$] at a temperature that comfortably can be withstood by oral tissues, for example at some temperature between body temperature and about 75°C, the type and amount of filler being sufficient so that the blend has a storage modulus greater than 100 $KN/_m^2$ [$10^6$ $dyne/cm^2$] at 75°C and an equilibrium relaxation stress greater than 50 $N/_m^2$ [500 $dyne/cm^2$] at 60°C.

2. A tray according to claim 1, wherein throughout the range of temperatures between 45°C and 75°C the storage modulus of the blend is less than 100 $GN/_m^2$ [$10^{12}$ $dyne/cm^2$] but greater than 100 $KN/_m^2$ [$10^6$ $dyne/cm^2$].

3. A tray according to claim 1, wherein throughout the range of temperatures between 50°C and 70°C the storage modulus of the blend is less than 10 $GN/_m^2$ [$10^{11}$ $dyne/cm^2$] but greater than 300 $KN/_m^2$ [3 X $10^6$ $dyne/cm^2$].

4. A tray according to claim 1, wherein throughout the range of temperatures between 50°C and 65°C the storage modulus of the blend is less than 10 $GN/_m^2$ [$10^{11}$ $dyne/cm^2$] but greater than 500 $KN/_m^2$ [5 X $10^6$ $dyne/cm^2$].

5. A tray according to claim 1, wherein the blend has an equilibrium relaxation stress greater than 100 $N/_m^2$ [$10^3$ $dyne/cm^2$] at 60°C.

6. A tray according to claim 1, wherein the blend has an equilibrium relaxation stress greater than 300 $N/_m^2$ [3 X $10^3$ $dyne/cm^2$] at 60°C.

7. A tray according to claim 1, wherein the blend has an equilibrium relaxation stress greater than 1 $KN/_m^2$ [$10^4$ $dyne/cm^2$] at 60°C.

8. A tray according to claim 1, wherein the filler comprises a fibrous, platy or finely-divided particulate material.

9. A tray according to claim 1, wherein the filler is selected from the group consisting of glass fiber, clay, mica, alumina, silica and calcium carbonate.

10. A tray according to claim 1, wherein the thermoplastic material comprises a polyester, polyurethane, or polycaprolactone.

**11.** A tray according to claim 10, wherein the material is a polycaprolactone having the formula:

$$(HO(CH_2)_5\overset{O}{\overset{\|}{C}}O((CH_2)_5\overset{O}{\overset{\|}{C}}O)_x(CH_2)_5\overset{O}{\overset{\|}{C}}M)_wR^1$$

wherein $R^1$ is hydrogen or an aromatic or a straight chain or branched aliphatic backbone, w is 1 if $R^1$ is hydrogen, and w otherwise has an average value from 1 to 4, M is oxygen or $-NR^2-$ where $R^2$ is hydrogen or a non-interfering aromatic or aliphatic group, and the product of w times x is greater than 35.

**12.** A tray according to claim 1, wherein the blend comprises at least one layer of a multi-layer thermoplastic molding composition.

**13.** Use of the softened tray of claim 1 for making an impression of dental tissue.

**Patentansprüche**

**1.** Dentalabdrucklöffel mit einer homogenen Mischung aus einem thermoplastischen Material und einem thixotropen Füllstoff, wobei der Löffel zur Verwendung im Mund geformt und dimensioniert ist, und die Mischung ein Feststoff mit einem Speichermodul (storage modulus) von wenigstens 100 $MN/m^2$ [$10^9$ $dyn/cm^2$] bei 38°C und ein manuell verformbarer halbfester Stoff mit einem Speichermodul von weniger als 100 $GN/m^2$ [$10^{12}$ $dyn/cm^2$] bei einer Temperatur, die von oralen Geweben angenehm ausgehalten werden kann, beispielsweise bei einer Temperatur zwischen der Körpertemperatur und etwa 75°C, ist, und die Art und Menge des Füllstoffs ausreicht, so daß die Mischung ein Speichermodul von mehr als 100 $KN/m^2$ [$10^6$ $dyn/cm^2$] bei 75°C und eine Gleichgewichtsspannungsrelaxation von mehr als 50 $N/m^2$ [500 $dyn/cm^2$] bei 60°C aufweist.

**2.** Löffel nach Anspruch 1, worin über den Temperaturbereich zwischen 45°C und 75°C das Speichermodul der Mischung weniger als 100 $GN/m^2$ [$10^{12}$ $dyn/cm^2$], jedoch mehr als 100 $KN/m^2$ [$10^6$ $dyn/cm^2$] beträgt.

**3.** Löffel nach Anspruch 1, worin über den Temperaturbereich zwischen 50°C und 70°C das Speichermodul der Mischung weniger als 10 $GN/m^2$ [$10^{11}$ $dyn/cm^2$], jedoch mehr als 300 $KN/m^2$ [$3 \times 10^6$ $dyn/cm^2$] beträgt.

**4.** Löffel nach Anspruch 1, worin über den Temperaturbereich zwischen 50°C und 65°C das Speichermodul der Mischung weniger als 10 $GN/m^2$ [$10^{11}$ $dyn/cm^2$], jedoch mehr als 500 $KN/m^2$ [$5 \times 10^6$ $dyn/cm^2$] beträgt.

**5.** Löffel nach Anspruch 1, worin die Mischung eine Gleichgewichtsspannungsrelaxation von mehr als 100 $N/m^2$ [$10^3$ $dyn/cm^2$] bei 60°C aufweist.

**6.** Löffel nach Anspruch 1, worin die Mischung eine Gleichgewichtsspannungsrelaxation von mehr als 300 $N/m^2$ [$3 \times 10^3$ $dyn/cm^2$] bei 60°C aufweist.

**7.** Löffel nach Anspruch 1, worin die Mischung eine Gleichgewichtsspannungsrelaxation von mehr als 1 $KN/m^2$ [$10^4$ $dyn/cm^2$] bei 60°C aufweist.

**8.** Löffel nach Anspruch 1, worin der Füllstoff ein faserförmiges, plattenförmiges oder fein zerteiltes teilchenförmiges Material umfaßt.

**9.** Löffel nach Anspruch 1, worin der Füllstoff ausgewählt wird aus der Gruppe, bestehend aus Glasfaser, Ton, Mika, Aluminiumoxid, Siliciumdioxid und Calciumcarbonat.

**10.** Löffel nach Anspruch 1, worin das thermoplastische Material einen Polyester, ein Polyurethan oder ein Polycaprolacton umfaßt.

**11.** Löffel nach Anspruch 10, worin das Material ein Polycaprolacton der folgenden Formel ist:

$$(HO(CH_2)_5\overset{\overset{O}{\|}}{C}O((CH_2)_5\overset{\overset{O}{\|}}{C}O)_x(CH_2)_5\overset{\overset{O}{\|}}{C}M)_wR^1$$

worin $R^1$ Wasserstoff oder eine aromatische oder geradkettige oder verzweigte aliphatische Hauptkette ist, w 1 ist, wenn $R^1$ Wasserstoff ist, und w ansonsten einen Mittelwert von 1-4 aufweist, M Sauerstoff oder $-NR^2-$ ist, wobei $R^2$ Wasserstoff ist oder eine nicht störende aromatische oder aliphatische Gruppe, und das Produkt von w mal x größer als 35 ist.

12. Löffel nach Anspruch 1, worin die Mischung wenigstens eine Schicht einer mehrschichtigen thermoplastischen Formmasse umfaßt.

13. Verwendung des plastisch gemachten Löffels nach Anspruch 1 zur Herstellung eines Abdruckes eines Zahngewebes.

## Revendications

1. Porte-empreintes dentaire adaptable, comprenant un mélange homogène d'une matière thermoplastique et d'une charge thixotrope, le porte-empreintes étant configuré et dimensionné pour être utilisé dans la bouche, et le mélange étant un solide ayant un module de stockage d'au moins 100 $MN/m^2$ ($10^9$ $dyne/cm^2$) à 38°C et un semi-solide manuellement déformable ayant un module de stockage inférieur à 100 $GN/m^2$ ($10^{12}$ $dyne/cm^2$) à une température à laquelle les tissus buccaux peuvent résister aisément, par exemple à une certaine température comprise entre la température du corps et environ 75°C, le type et la quantité de la charge étant suffisants pour que le mélange ait un module de stockage supérieur à 100 $KN/m^2$ ($10^6$ $dyne/cm^2$) à 75°C et une contrainte de relaxation à l'équilibre supérieure à 50 $N/m^2$ (500 $dyne/cm^2$) à 60°C.

2. Porte-empreintes selon la revendication 1, dans lequel le module de stockage du mélange est inférieur à 100 $GN/m^2$ ($10^{12}$ $dyne/cm^2$) mais supérieur à 100 $KN/m^2$ ($10^6$ $dyne/cm^2$) dans toute la plage de température de 45°C à 75°C.

3. Porte-empreintes selon la revendication 1, dans lequel le module de stockage du mélange est inférieur à 10 $GN/m^2$ ($10^{11}$ $dyne/cm^2$) mais supérieur à 300 $KN/m^2$ ($3 \times 10^6$ $dyne/cm^2$) dans toute la plage de température de 50°C à 70°C.

4. Porte-empreintes selon la revendication 1, dans lequel le module de stockage du mélange est inférieur à 10 $GN/m^2$ ($10^{11}$ $dyne/cm^2$) mais supérieur à 500 $KN/m^2$ ($5 \times 10^6$ $dyne/cm^2$) dans toute la plage de température de 50°C à 65°C.

5. Porte-empreintes selon la revendication 1, dans lequel le mélange a une contrainte de relaxation à l'équilibre supérieure à 100 $N/m^2$ ($10^3$ $dyne/cm^2$) à 60°C.

6. Porte-empreintes selon la revendication 1, dans lequel le mélange a une contrainte de relaxation à l'équilibre supérieure à 300 $N/m^2$ ($3 \times 10^3$ $dyne/cm^2$) à 60°C.

7. Porte-empreintes selon la revendication 1, dans lequel le mélange a une contrainte de relaxation à l'équilibre supérieure à 1 $KN/m^2$ ($10^4$ $dyne/cm^2$) à 60°C.

8. Porte-empreintes selon la revendication 1, dans lequel la charge comprend un matériau fibreux, aplati ou particulaire finement divisé.

9. Porte-empreintes selon la revendication 1, dans lequel la charge est choisie dans le groupe formé par les fibres de verre, l'argile, le mica, l'alumine, la silice et le carbonate de calcium.

10. Porte-empreintes selon la revendication 1, dans lequel la matière thermoplastique comprend un polyester, un polyuréthanne ou une polycaprolactone.

11. Porte-empreintes selon la revendication 10, dans lequel la matière est une polycaprolactone de formule:

$$(HO(CH_2)_5\overset{\overset{\large O}{||}}{C}O((CH_2)_5\overset{\overset{\large O}{||}}{C}O)_x(CH_2)_5\overset{\overset{\large O}{||}}{C}M)_wR^1$$

dans laquelle $R^1$ est l'hydrogène ou un groupe aromatique, ou un squelette aliphatique à chaîne linéaire ou ramifiée, w est égal à 1 si $R^1$ est l'hydrogène, et dans le cas contraire w a une valeur moyenne de 1 à 4, M est l'oxygène ou $-NR^2-$ où $R^2$ est l'hydrogène ou un groupe aromatique ou aliphatique qui n'interfère pas, et le produit de w par x est supérieur à 35.

**12.** Porte-empreintes selon la revendication 1, dans lequel le mélange comprend au moins une couche d'une composition de moulage thermoplastique multicouche.

**13.** Utilisation du porte-empreintes ramolli selon la revendication 1 pour faire une empreinte de tissu dentaire.

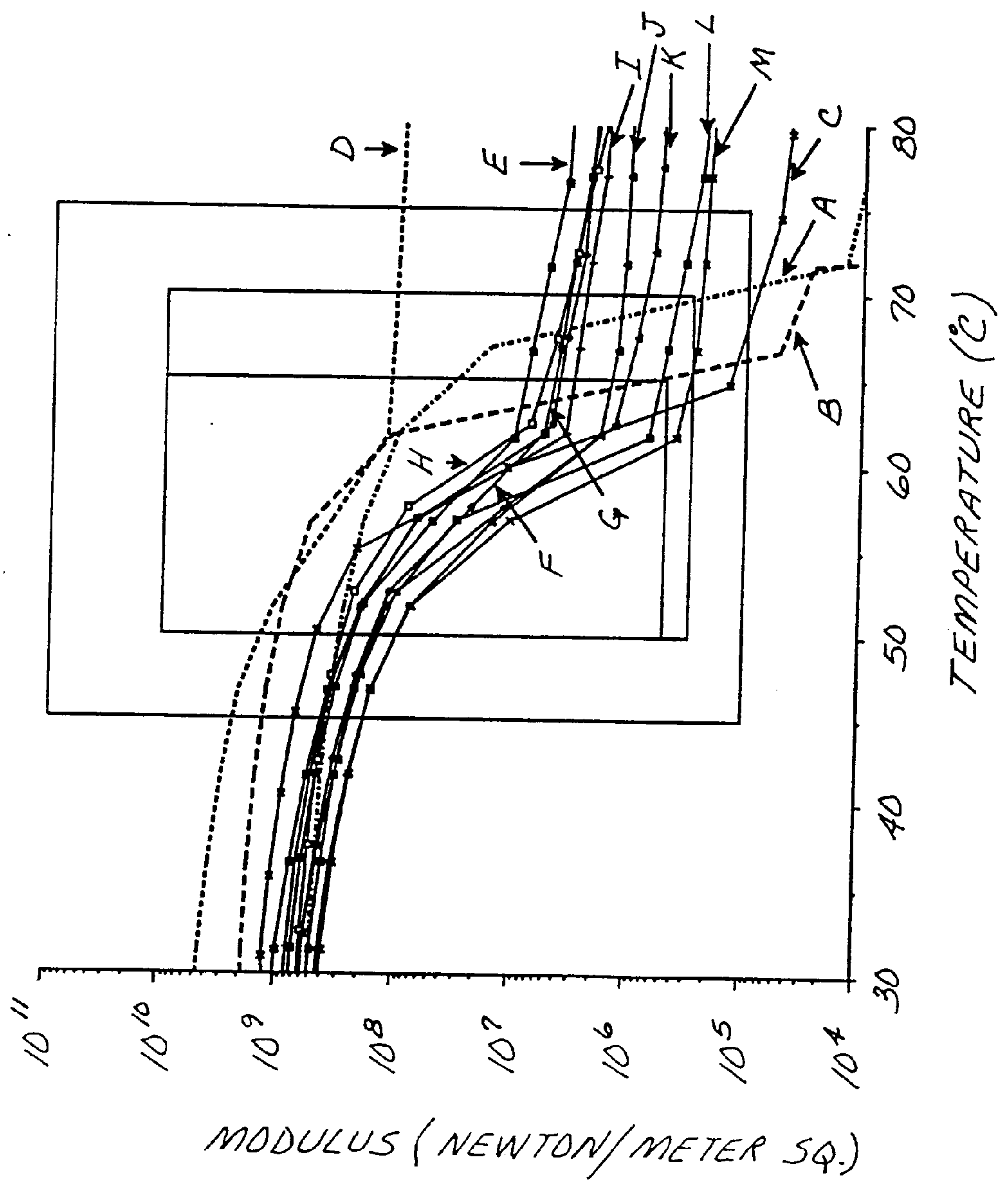
MODULUS (NEWTON/METER SQ.)
TEMPERATURE (°C)
30
40
50
60
70
80
10^11
10^10
10^9
10^8
10^7
10^6
10^5
10^4
A
B
C
D
E
F
G
H
I
J
K
L
M

**Fig. 1**

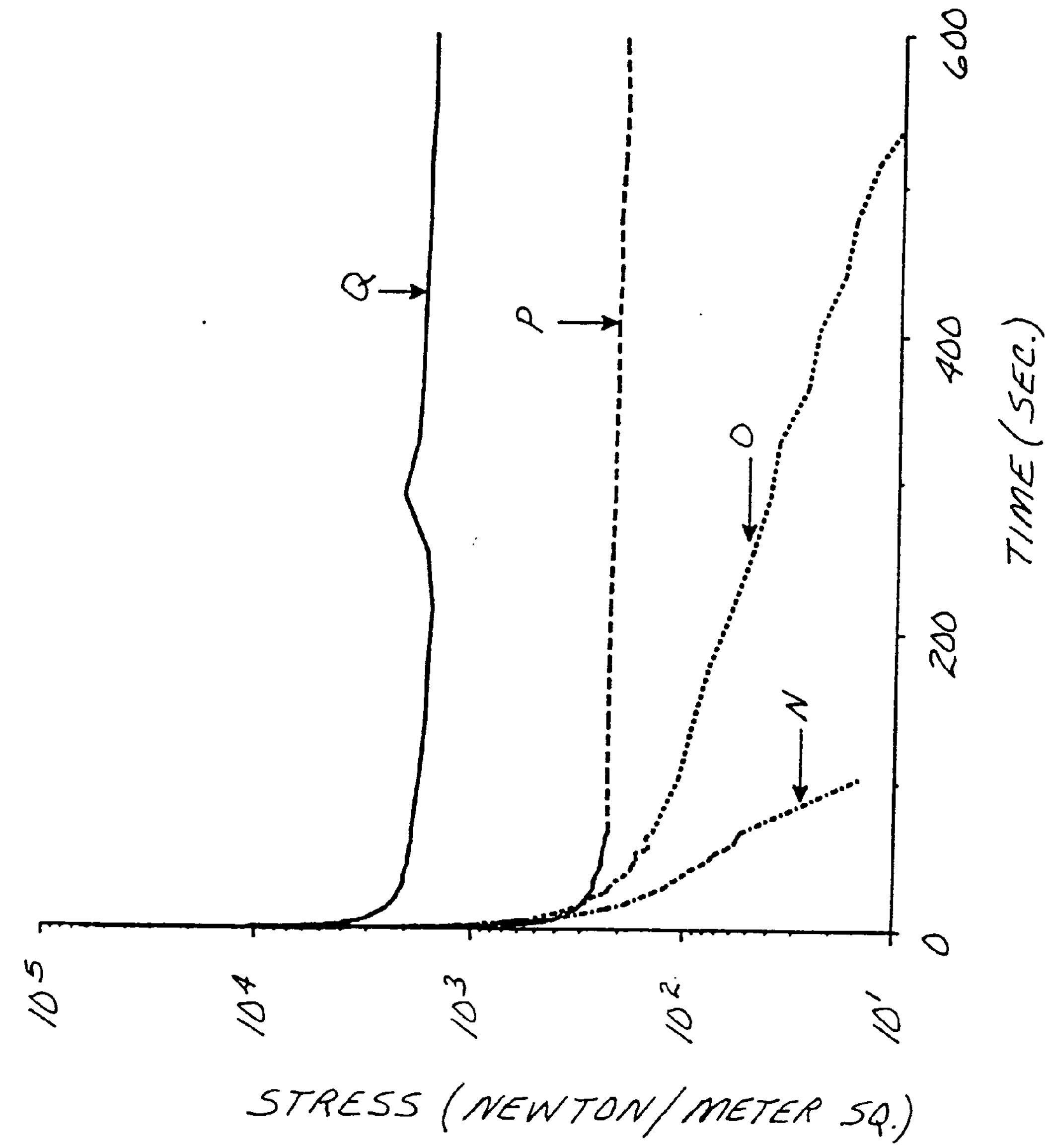
Q
P
O
N
10^5
10^4
10^3
10^2
10^1
0
200
400
600
TIME (SEC.)
STRESS (NEWTON/METER SQ.)

**Fig. 2**

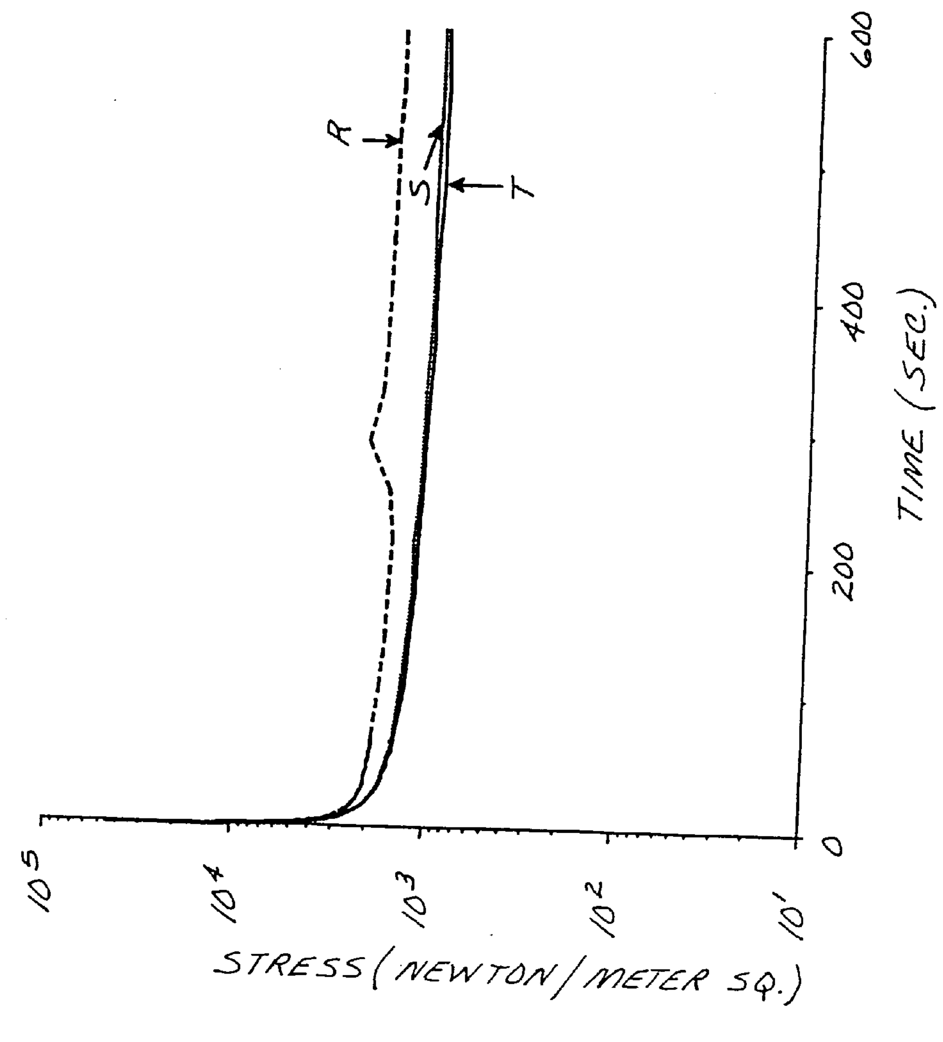

$10^5$
$10^4$
$10^3$
$10^2$
$10^1$
STRESS (NEWTON/METER SQ.)
0
200
400
600
TIME (SEC.)
R
S
T


Fig. 3

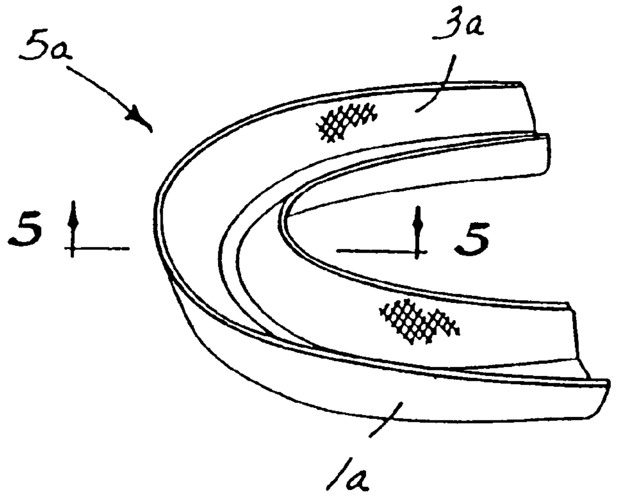


Fig. 4

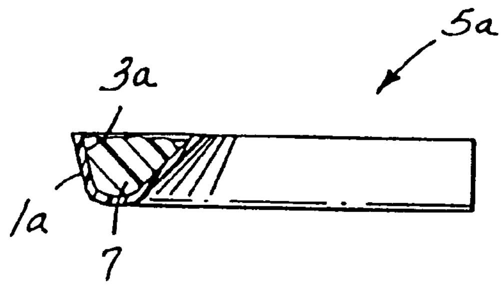


Fig. 5